Europäisches Patentamt

European Patent Office

Office européen des brevets

(19)

(11) Veröffentlichungsnummer : **0 226 771**
**B1**

(12) **EUROPÄISCHE PATENTSCHRIFT**

(45) Veröffentlichungstag der Patentschrift :
17.05.89

(51) Int. Cl.⁴ : **F 42 B 13/34**, B 21 D 39/04, B 21 D 39/06, B 29 C 65/06

(21) Anmeldenummer : 86115319.5

(22) Anmeldetag : 05.11.86

(54) **Verfahren zur Befestigung einer Leuchtsatzhülse in einer Bohrung im Heckteil eines Geschosskörpers.**

(30) Priorität : 16.12.85 CH 5353/85

(43) Veröffentlichungstag der Anmeldung :
01.07.87 Patentblatt 87/27

(45) Bekanntmachung des Hinweises auf die Patenterteilung : 17.05.89 Patentblatt 89/20

(84) Benannte Vertragsstaaten :
BE CH DE FR GB IT LI NL SE

(56) Entgegenhaltungen :
FR—A— 2 398 283
FR—A— 2 544 407

(73) Patentinhaber : Werkzeugmaschinenfabrik Oerlikon-Bührle AG
Birchstrasse 155
CH-8050 Zürich (CH)

(72) Erfinder : Katzmann, Harald
Hardstrasse 66
D-5432 Neuenhof (DE)
Erfinder : Senn, Werner
Schwellistrasse 62
D-8052 Zürich (DE)
Erfinder : Ammann, David
Rebhaldenstrasse 11
D-8625 Gossau (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Befestigung einer Leuchtsatzhülse in einer Sackbohrung im Heckteil eines Geschosskörpers, wobei in der Bohrungswand, im Bereich des Bodens der Sackbohrung, eine ringförmige Nut erzeugt wird, in welche ein Rand der Leuchtsatzhülse hineingepresst wird.

Bei einem bekannten Verfahren dieser Art (siehe EP-A-0072050) wird

a) in einem ersten Verfahrensschritt die Leuchtsatzhülse mit Hilfe eines Einpresszapfens in die Bohrung hineingepresst und

b) in einem zweiten Verfahrensschritt ein vorzugsweise elastisch deformierbarer Kunststoffzapfen durch einen Verstemmeinsatz derart auf den Boden der Bohrung gepresst, dass dieser sich radial nach aussen aufweitet und dabei den Rand der Hülse in die Nut presst.

Es sind noch andere Verfahren zur Befestigung der Leuchtsatzhülse in einer Bohrung im Heckteil eines Geschosskörpers bekannt (siehe DE-A-2826497). Insbesondere kann die Hülse einen grösseren Aussendurchmesser aufweisen als der Durchmesser der Bohrung und mit Presssitz eingesetzt werden, oder sie kann eingeklebt werden, oder durch eine Bördelung gehalten werden.

Alle diese bekannten Verfahren haben gewisse Nachteile. Entweder sind sie zu teuer, zu wenig zuverlässig oder nicht für grosse Stückzahlen geeignet.

Die Aufgabe, welche mit der vorliegenden Erfindung gelöst werden soll, besteht in der Schaffung eines Verfahrens, zur Befestigung einer Hülse in einer Bohrung im Heckteil eines Geschosses, das einerseits eine zuverlässige Verbindung der beiden Teile gewährleistet und andererseits für grosse Stückzahlen geeignet ist.

Das Verfahren, mit dem diese Aufgabe gelöst wird, ist dadurch gekennzeichnet, dass ein Bolzen, aus dem die Leuchtsatzhülse hergestellt werden soll, in die Sackbohrung des Geschosskörpers hineingeschoben wird, bis die Stirnfläche des Bolzens am Boden der Sackbohrung anliegt, dass der Bolzen relativ zum Geschosskörper gedreht wird, um durch Reibung zwischen Stirnfläche des Bolzens und Boden der Sackbohrung den Bolzen an seinem vorderen Ende so weit zu erhitzen, dass er sich verformen lässt und in die ringförmige Nut in der Bohrungswand der Sackbohrung des Geschosskörpers hineinfliesst, zur Bildung des genannten Randes und dass anschliessend der Bolzen zu einer Leuchtsatzhülse ausgebohrt wird.

Ein Ausführungsbeispiel des erfindungsgemässen Verfahrens, zur Befestigung einer Leuchtsatzhülse in einer Bohrung im Heckteil eines Geschosskörpers, ist im folgenden, anhand der beigefügten Zeichnung, ausführlich beschrieben. Es zeigt:

Fig. 1 einen Längsschnitt durch ein bekanntes Treibspiegelgeschoss,

Fig. 2 einen in grösserem Massstab gezeichneten Längsschnitt durch den Heckteil des erfindungsgemässen Geschosses.

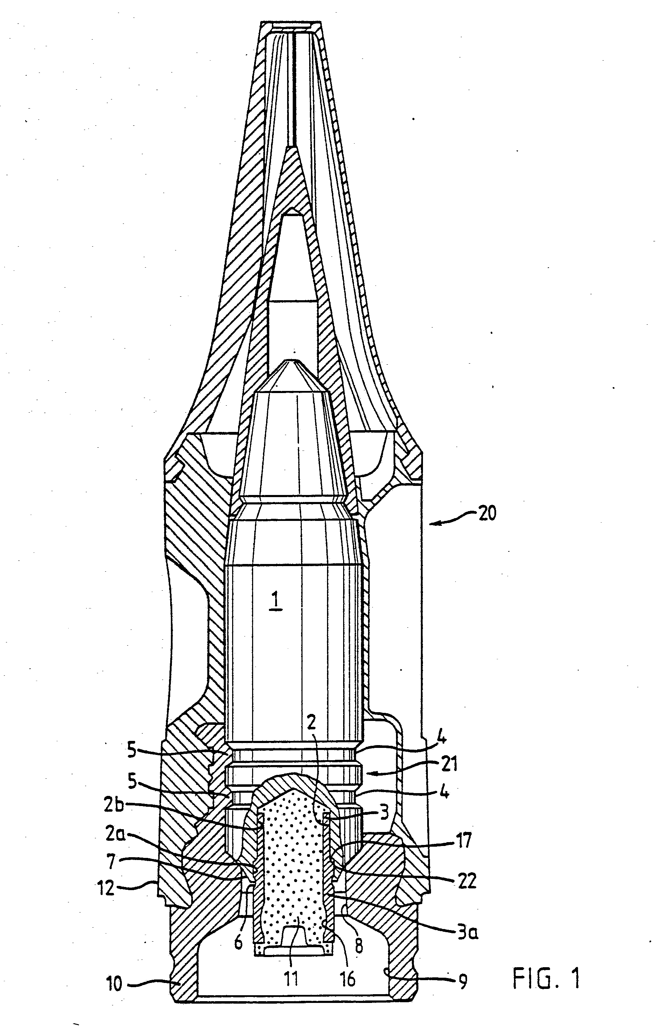

Gemäss Fig. 1 weist der bekannte Geschosskörper 1 eines Treibspiegelgeschosses 20 im Heck 21 eine Aussparung 2 auf. Diese Aussparung 2 wird durch eine Sackbohrung gebildet, deren Achse koaxial zur Geschossachse angeordnet ist. Diese Sackbohrung 2 besteht aus zwei Abschnitten 2a und 2b, von denen der erste Abschnitt 2a einen grösseren Durchmesser besitzt als der zweite Abschnitt 2b. In dieser Sackbohrung 2 befindet sich das vordere Ende einer Leuchtsatzhülse 3. Dieses vordere Ende der Leuchtsatzhülse 3 ist mit einem Presssitz in den vorderen Abschnitt 2b der Sackbohrung 2 eingesetzt. Dabei steht eine Schulter 17 der Hülse 3 an einer Schulter 22 des Geschosskörpers 1 an. Der hintere Abschnitt 3a der Leuchtsatzhülse 3 weist eine äussere Ringnut 6 auf, in welche ein dünnwandiger Kragen 7 des Geschosskörpers 1 eingebördelt ist. Die Leuchtsatzhülse 3 besitzt eine Bohrung von durchgehend gleichem Durchmesser und ragt vom Heckteil 21 des Geschosskörpers 1 nach hinten in eine zentrale Bohrung 8 des Treibspiegelheckteils 10 hinein. Diese Bohrung 8 des Treibspiegelheckteiles 10 mündet in eine grössere Ausnehmung 9. Durch einen Presssitz, mit welchem die Leuchtsatzhülse 3 gehalten wird, wird verhindert, dass beim Abschuss des Geschosses Treibladungsgase in die Sackbohrung 2 eindringen. In der Leuchtsatzhülse 3 befindet sich ein Leuchtsatz 11, der hinten durch die Treibladungsgase gezündet wird. Falls Treibladungsgase zwischen der Wand der Sackbohrung 2 und der Leuchtsatzhülse 3 eindringen, besteht die Gefahr, dass die Leuchtsatzhülse 3 oder der Leuchtsatz 11 vorzeitig ausgestossen werden oder dass der Leuchtsatz auch vorne angezündet wird.

Am Treibspiegelheckteil 10 ist ein Geschossmantel 12 befestigt, der vorzugsweise aus Kunststoff besteht. Eine ringförmige Nut 16 an der Innenwand der Leuchtsatzhülse 3 ermöglicht eine gute Verankerung des Leuchtsatzes 11 in der Leuchtsatzhülse 3. Der Geschosskörper 1 besitzt zwei Ringnuten 4, in welche z. B. sechs gleichmässig an seinem Umfang verteilte Nocken 5 des Treibspiegelheckteiles 10 hineinragen. Von diesen Nocken 5 ist in Fig. 1 nur je einer sichtbar.

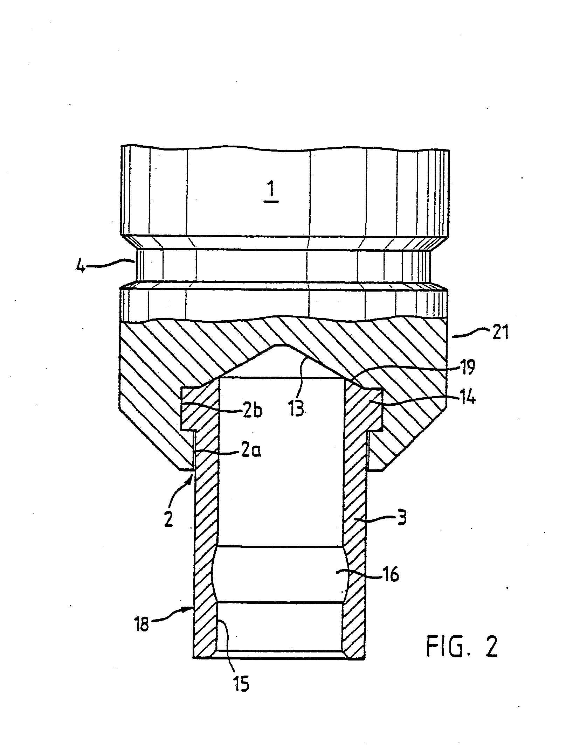

Gemäss Fig. 2 weist der erfindungsgemässe Geschosskörper 1 eines Treibspiegelgeschosses ebenfalls im Heck 21 eine Sackbohrung 2 auf, die aus zwei Abschnitten 2a und 2b besteht, wobei der vordere Abschnitt 2b einen grösseren Durchmesser besitzt, als der hintere Abschnitt 2a. Der Boden 13 dieser Sackbohrung 2 ist kegelig, mit einem Kegelwinkel von 120°. In dieser Sackbohrung 2 ist eine Leuchtsatzhülse 3 befestigt, welche mit einem Rand 14 in den vorderen Abschnitt 2b der Sackbohrung 2 hineinragt. Damit der Leuchtsatz 11 in der Leuchtsatzhülse 3 verankert werden kann, ist ebenfalls eine ringförmige Nut 16 an der Innenwand 15 der Leuchtsatzhülse 3 vorhanden.

Das erfindungsgemässe Verfahren zur Befestigung der Leuchtsatzhülse 3 in der Sackbohrung 2 des Geschosskörpers 1 besteht nun darin, zuerst die Sackbohrung 2 mit der ringförmigen Nut 2b oder dem Abschnitt 2b von grösserem Durchmesser herzustellen, anschliessend einen Bolzen 18, aus dem die Leuchtsatzhülse 3 später hergestellt wird, in diese Sackbohrung 2 des Geschosskörpers 1 hineinzuschieben, bis die Stirnfläche 19 des Bolzens 18 am Boden 13 der Sackbohrung 2 anliegt. Dann wird der Bolzen 18 in der Sackbohrung 2 gedreht. Durch die Reibung zwischen der Stirnfläche 19 des Bolzens 18 und dem Boden 13 der Sackbohrung 2 erhitzt sich der Bolzen 18 so weit, dass er sich verformen lässt und in die ringförmige Nut 2b, d. h. in den vorderen Abschnitt 2b der Sackbohrung 2 hineinfliesst und den Rand 14 bildet. Anschliessend wird der Bolzen 18 zu einer Leuchtsatzhülse 3 ausgebohrt und die ringförmige Nut 16 an der Innenwand 15 der Leuchtsatzhülse 3 ausgedreht.

## Patentanspruch

Verfahren zur Befestigung einer Leuchtsatzhülse (3) in einer Sackbohrung (2) im Heckteil (21) eines Geschosskörpers (1), wobei in der Bohrungswand, im Bereich des Bodens (13) der Sackbohrung (2), eine ringförmige Nut (2b) erzeugt wird, in welche ein Rand (14) der Leuchtsatzhülse (3) hineingepresst wird, dadurch gekennzeichnet, dass ein Bolzen (18), aus dem die Leuchtsatzhülse (3) hergestellt werden soll, in die Sackbohrung (2) des Geschosskörpers (1) hineingeschoben wird, bis die Stirnfläche (19) des Bolzens (18) am Boden (13) der Sackbohrung (2) anliegt, dass der Bolzen (18) relativ zum Geschosskörper (1) gedreht wird, um durch Reibung zwischen Stirnfläche (19) des Bolzens (18) und Boden (13) der Sackbohrung (2) den Bolzen (18) an seinem vorderen Ende so weit zu erhitzen, dass er sich verformen lässt und in die ringförmige Nut (2b) in der Bohrungswand der Sackbohrung (2) des Geschosskörpers (1) hineinfliesst, zur Bildung des genannten Randes (14), und dass anschliessend der Bolzen (18) zu einer Leuchtsatzhülse (3) ausgebohrt wird.

## Claim

Method for attaching a tracer case (3) in a blind bore (2) in the rear part (21) of a projectile body (1), producing in the wall of the bore, near the floor (13) of the blind bore (2), an annular groove (2b) into which one rim (14) of the tracer case (3) is pressed, characterised by pushing a pin (18), which will be used to produce the tracer case (3), into the blind bore (2) of the projectile body (1), until the end face (19) of the pin (18) is touching the floor (13) of the blind bore (2), by turning the pin (18) relative to the projectile body (1), in order by friction between the end face (19) of the pin (18) and the floor (13) of the blind bore (2) to heat the pin (18) at its front end until it can be deformed and flows into the annular groove (2b) in the wall of the blind bore (2) of the projectile body (1), to form said rim (14), and by finally drilling out the pin (18) to make a tracer case (3).

## Revendication

Procédé de fixation d'une douille de traceur (3) dans un perçage borgne (2) de la queue (21) d'un corps de projectile (1), procédé selon lequel on réalise une rainure annulaire (2b) dans la paroi du perçage borgne au niveau du fond (13) de ce perçage borgne (2), rainure dans laquelle on presse le bord (14) de la douille (3) du traceur, procédé caractérisé en ce qu'on introduit dans le perçage borgne (2) du corps (1) du projectile un goujon (18) dans lequel on réalisera la douille (3) pour le traceur, ce goujon étant introduit jusqu'à ce que sa surface frontale (19) s'applique contre le fond (13) du perçage borgne (2), on fait tourner le goujon (18) par rapport au corps (1) du projectile pour que par frottement entre la surface frontale (19) du goujon (18) et le fond (13) du trou borgne (2) on chauffe l'extrémité avant du goujon (18) jusqu'à ce qu'il puisse se déformer et fluer dans la rainure annulaire (2b) de la paroi du perçage borgne (2) du corps (1) du projectile pour former ledit bord (14) puis on perce le goujon (18) pour former une douille de traceur (3).

FIG. 1

FIG. 2